**Europäisches Patentamt**

**European Patent Office**

**Office européen des brevets**

(19)

(11) Veröffentlichungsnummer : **0 344 415 B1**

(12)

# EUROPÄISCHE PATENTSCHRIFT

(45) Veröffentlichungstag der Patentschrift :
**03.06.92 Patentblatt 92/23**

(51) Int. Cl.⁵ : **B60K 5/04,** B60K 5/12

(21) Anmeldenummer : **89104686.4**

(22) Anmeldetag : **16.03.89**

(54) **Lageranordnung für ein Antriebsaggregat eines Kraftfahrzeugs.**

(30) Priorität : **30.05.88 DE 3818302**

(43) Veröffentlichungstag der Anmeldung :
**06.12.89 Patentblatt 89/49**

(45) Bekanntmachung des Hinweises auf die
Patenterteilung :
**03.06.92 Patentblatt 92/23**

(84) Benannte Vertragsstaaten :
**DE ES FR GB IT**

(56) Entgegenhaltungen :
**DE-A- 3 202 256**
**DE-A- 3 331 417**
**DE-B- 1 069 004**
**GB-A- 2 183 572**

(73) Patentinhaber : **Dr.Ing.h.c. F. Porsche**
**Aktiengesellschaft**
**Porschestrasse 42**
**W-7000 Stuttgart 40 (DE)**

(72) Erfinder : **Fischle, Rüdiger, Dipl.-Ing.**
**Niederhofenstrasse 33/2**
**W-7250 Leonberg (DE)**
Erfinder : **von Broock, Ulrich, Dr. Dipl.-Ing.**
**Rohrweg 27**
**W-3470 Höxter 1 (DE)**

## Beschreibung

Die Erfindung bezieht sich auf eine Lageranordnung nach dem Oberbegriff des Anspruchs 1.

Aus der DE-OS 33 31 417 ist eine Lageranordnung für ein Antriebsaggregat eines Kraftfahrzeugs mit drei Lagern und zwei Drehmomentstützen bekannt geworden, wobei zwei gegenüberliegende Lager im Bereich einer durch den Aggregat-Schwerpunkt verlaufenden Hauptträgheitsachse angeordnet ist. Eine solche Lageranordnung ist aufgrund der weiteren neben der Trägheitsachse vorgesehenen Lager und Drehmomentstützen bauaufwendig und eine Abstimmung der Lager untereinander entsprechend ihrer Funktion ist aufgrund der weit auseinanderliegenden und im Abstand zur Trägheitsachse liegenden Lagerorte relativ aufwendig.

Aufgabe der Erfindung ist es eine Anordnung von wenigen Aggregatlagern zu schaffen, die das spezielle Schwingungsverhalten eines Drei-Zylindermotors berücksichtigt, d.h. in vibrationsarmen Bereichen liegen und jeweils für sich auf eine Hauptbelastungsart abstimmbar sind.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die Anordnung des nahezu die gesamte statische Last tragenden Zentrallagers sowie der Drehmomentstütze im schwingungsarmen Bereich, sowohl im Stand als auch unter Last sehr geringe Vibrationspegel an den im wesentlichen das Aggregat haltenden Lagerelementen auftreten.

Zu dem einzigen, unterhalb des Motors angeordneten Zentrallager läßt sich zu der am Zylinderkopf befestigte Drehmomentstütze eine möglichst große vertikale Abstützbasis für das Motordrehmoment erreichen. Damit sind die abzustützenden Kräfte so gering, daß das Fahrzeug kein unangenehmes durch Lastwechsel hervorgerufenes Längsruckeln aufweist.

Die Gummielemente sind aus schwingungstechnischer Sicht möglichst nahe am Aggregat angeordnet, um Vibrationserhöhungen durch lange Hebelarme und Resonanzen der Lagerträger zu vermeiden. Zur Abstützung des Drehmoments wird die Geometrie des Motors, d.h., nahezu die gesamte Bauhöhe ausgenutzt.

Das Stützlager ist an der Stirnseite des Motors angeordnet, da hier im Vergleich zur Stirnseite des Getriebes geringere Vibrationspegel bei einem Dreizylindermotor auftreten und außerdem keine Getriebegeräusche übertragen werden.

Die Steifigkeit des Lagerelements am Stützlager kann in Hoch- wie auch in Fahrtrichtung sehr weich ausgelegt werden, da die Stützlast gering ist und es kein Drehmoment abstützen muß. Da der Aggregate-Schwerpunkt mit dem Zentrallager und der Drehmomentstütze nahezu in einer Ebene liegt, treten am Stützlager keine wesentlichen Trägheitskräfte beim Beschleunigen und Abbremsen auf.

Ein Ausführungsbeispiel der Erfindung ist in der Zeichnung dargestellt und wird im folgenden näher beschrieben.

Es zeigen:

Fig. 1 eine Vorderansicht eines Antriebsaggregats mit einem Zentrallager, einem Stützlager und einer Drehmomentstütze und

Fig. 2 eine Draufsicht des Antriebsaggregats mit der Lageranordnung gemäß Fig. 1.

Ein Antriebsaggregat 1 insbesondere ein Drei-Zylinder-Motor ist über eine aus zwei Lagern 2 und 3 und einer Drehmomentstütze 4 bestehenden Abstützung am Fahrzeugaufbau gehalten.

Das Zentrallager 2 ist am Motor 5 unterhalb einer durch den Schwerpunkt S verlaufenden horizontalen Ebene X-X und die Drehmomentstütze 4 ist oberhalb dieser Ebene am Zylinderkopfdeckel angeordnet. Das Zentrallager 2 sowie die Drehmomentstütze 4 sind in einer schwingungsarmen Zone des Aggregats vorgesehen, deren Bereich etwa in einer durch den Schwerpunkt S verlaufenden senkrechten Ebene Y-Y liegt in denen das Lager 2 und die Drehmomentstütze 4 mit relativ großer Basis h gehalten sind. Das Lager 2 ist desweiteren mit einem geringstmöglichen Abstand $h_1$ unter dem Schwerpunkt 5 des Aggregats angeordnet, so daß es die gesamte statische Last tragen kann.

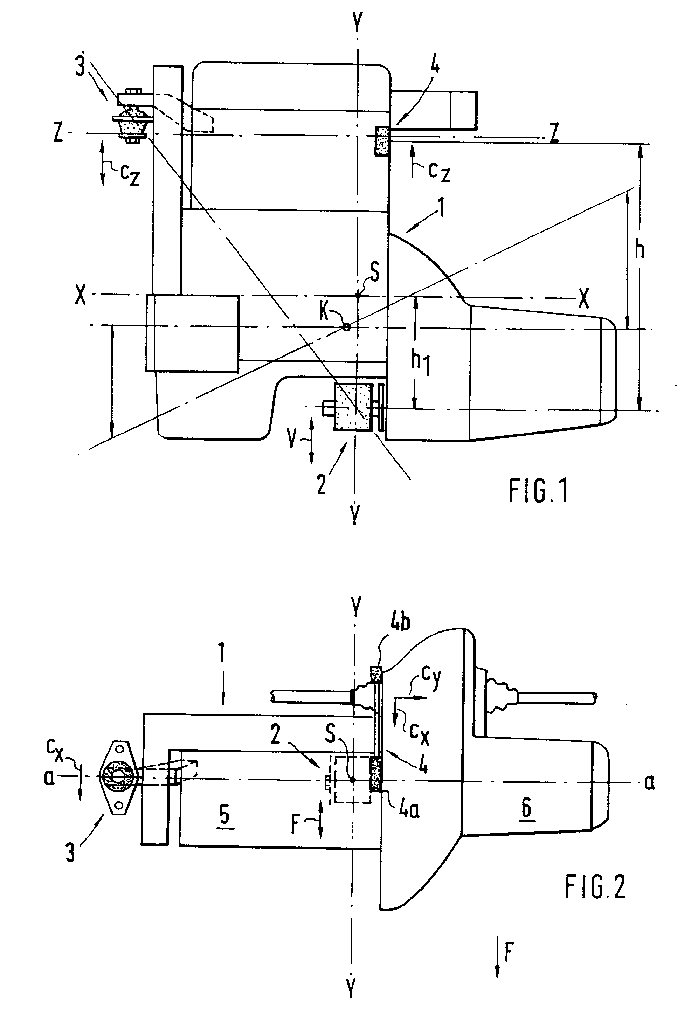

Stirnseitig des Motors 5, ist das Stützlager 3 angeordnet, - welches in bezug auf die Vorderansicht Fig. 1 - dem Zentrallager diagonal gegenüberliegt. Insbesondere liegt das Stützlager 3 in einer senkrechten Längsebene a-a (Fig. 2), die durch den Schwerpunkt S verläuft.

Bei einem Reihen-Drei-Zylinder-Motor dominieren die umlaufenden Massenmomente 1.Ordnung, wodurch der Motor eine taumelförmige elliptische Bewegung durchführt. Der Knotenpunkt K der Aggregatvibrationen liegt nahezu in Aggregatmitte und der Vibrationspegel nimmt zu den Enden hin in vertikaler und horizontaler Richtung fast linear zu, wie die Pfeile in Fig. 1 andeutungsweise zeigen.

Aus diesem speziellen Schwingverhalten des Drei-Zylinder-Motors ergibt sich die Anordnung des Lagers 2 und der Drehmomentstütze 4 sowie deren Belastungen. So wird vom Zentrallager 2 nahezu die gesamte statische Aggregatlast aufgenommen. Das Drehmoment wird ausschließlich vom Zentrallager 2 und der Drehmomentstütze 4 abgestützt. Das Stützlager 3 an der Stirnseite des Motors 5 hat nur die Aufgabe das Aggregat gegen ein Abkippen zu sichern.

Da das Zentrallager 2 neben den statischen und den durch die Fahrbahn angeregten dynamischen Kräften auch das Motordrehmoment in Verbindung mit der Drehmomentstütze 4 aufnehmen muß und zusätzlich zur Entkopplung des Leerlaufschüttelns dient, weist z.B. dieses als Buchsenlager ausgeführte Zentrallager 2 einen definierten Freiweg zur Entkopplung des Leerlaufs auf. Das Lager 2 weist einen zweistufigen Steifigkeitsverlauf auf, so daß es bei kleinen Schwingwegen in Fahrtrichtung eine verhältnismäßig geringe Steifigkeit x hat, d.h., es ist weich und bei einer größeren Auslenkung ist es steif mit progressivem Anstieg der Steifigkeit.

Die Drehmomentstütze 4 umfaßt eine in elastischen Lagern 4a und 4b gehaltene Zug/Druckstrebe zwischen dem Zylinderkopf und einer Fahrzeugaufbauwand. Die Lager haben in Längsrichtung $c_x$ ebenfalls einen progressiven Steifigkeitsverlauf. In Hoch- und Querrichtung $c_Z$, $c_Y$ hat die Drehmomentstütze 4 nur eine geringe Steifigkeit. Die Stütze 4 ist mit einem möglichst großen Abstand h zum Zentrallager 2 angeordnet, damit die Basis der Abstützung maximal auszunutzen ist.

Das Stützlager 3 stützt nahezu kein Motordrehmoment sowie keine Trägheitskräfte ab und kann daher in Fahrtrichtung $c_X$ und in Hochrichtung $c_Z$ relativ weich ausgeführt werden.

## Patentansprüche

1. Lageranordnung für ein Antriebsaggregat eines Kraftfahrzeugs für einen quereingebauten Drei-Zylindermotor, der über mehrere Lager sowie über eine Drehmomentstütze aufbauseitig gehalten ist, dadurch gekennzeichnet, daß ein Zentrallager (2) zwischen Motor und Fahrzeugaufbau unterhalb einer durch einen Schwerpunkt (S) des Aggregats (1) verlaufenden horizontalen Ebene (X-X) und die Drehmomentstütze (4) oberhalb dieser Ebene angeordnet und am Fahrzeugaufbau im Lager (4b) abgestützt ist und daß das Zentrallager (2) sowie die Drehmomentstütze (4) etwa in einer gemeinsamen durch den Schwerpunkt (S) verlaufenden senkrechten Querebene (Y-Y) angeordnet sind und daß ein Stützlager (3) stirnseitig des Aggregats (1) zum Fahrzeugaufbau abgestützt gehalten wird.

2. Lageranordnung nach Anspruch 1, dadurch gekennzeichnet, daß das Zentrallager (2) mit einem geringstmöglichen vertikalen Abstand ($h_1$) unter dem Schwerpunkt (S) und im schwingungsarmen Bereich des Aggregats (1) derart angeordnet ist, daß es ein nahezu die gesamte statische Last des Aggregats (1) aufnehmendes Lager bildet.

3. Lageranordnung nach den Ansprüchen 1 oder 2, dadurch gekennzeichnet, daß die Drehmomentstütze (4) mit einer etwa der Bauhöhe des Aggregats entsprechenden Basis (h) zum Zentrallager (2) angeordnet ist.

4. Lageranordnung nach einem oder mehreren der vorhergehenden Ansprüche, dadurch gekennzeichnet, daß das Stützlager (3) dem Zentrallager (2) diagonal gegenüberliegend in einer durch den Schwerpunkt (S) verlaufenden senkrechten Längsebene (a-a) angeordnet ist.

5. Lageranordnung nach Anspruch 4, dadurch gekennzeichnet, daß das Stützlager (3) in Hochrichtung ($c_Z$) sowie in Fahrtrichtung ($c_X$) eine relativ weiche Kennung aufweist.

6. Lageranordnung nach einem oder'mehreren der vorhergehenden Ansprüche, dadurch gekennzeichnet, daß das Zentrallager (2) in Fahrtrichtung einen zwei- stufigen Steifigkeitsverlauf aufweist und bei kleinen Schwingwegen eine geringe Steifigkeit und bei einer großen Auslenkung steifer mit einem progressiven Verlauf ausgeführt ist.

## Claims

1. A bearing arrangement for a drive unit of a motor vehicle for a transversely mounted three-cylinder engine held on the body by way of a plurality of bearings and by way of a torque support, characterized in that a central bearing (2) is arranged between the engine and the vehicle body below a horizontal plane (X-X) extending through a centre of gravity (S) of the unit (1) and the torque support (4) is arranged above the said plane and is supported on the vehicle body in the bearing (4b), and the central bearing (2) and the torque support (4) are arranged substantially in a common vertical transverse plane (Y-Y) extending through the centre of gravity (S), and a support bearing (3) is held supported on the front end of the unit (1) towards the vehicle body.

2. A bearing arrangement according to Claim 1, characterized in that the central bearing (2) is arranged at a minimum vertical distance ($h_1$) below the centre of gravity (S) and in the low-vibration area of the unit (1) in such a way that it forms a bearing which absorbs almost the entire static load of the unit (1).

3. A bearing arrangement according to Claim 1 or 2, characterized in that the torque support (4) is arranged with a base (h) with respect to the central bearing (2) corresponding to substantially the structural height of the unit.

4. A bearing arrangement according to one or more of the preceding Claims, characterized in that the support bearing (3) is arranged diagonally opposite the central bearing (2) in a vertical longitudinal plane (a-a) extending through the centre of gravity (S).

5. A bearing arrangement according to Claim 4, characterized in that the support bearing (3) has a relatively soft characteristic in the vertical direction ($c_Z$) and in the direction of travel ($c_X$).

6. A bearing arrangement according to one or more of the preceding Claims, characterized in that the central bearing (2) has a two-stage rigidity curve in the direction of travel, and during minor vibrations has a low degree of rigidity and is constructed so as to be more rigid with a progressive curve during a major deviation.

## Revendications

1. Dispositif de support pour un groupe moteur d'un véhicule automobile pour un moteur à trois cylindres monté transversalement qui est maintenu côté carrosserie par plusieurs supports ainsi que par un appui de couple de rotation, caractérisé en ce qu'un support central (2) est prévu entre le moteur et la carrosserie du véhicule, au-dessous d'un plan horizontal (X-X) passant par un centre de gravité (S) du groupe (1) et que l'appui de couple de rotation (4) est prévu au-dessus de ce plan et prend appui sur la carrosserie du véhicule dans le support (4b), en ce que le support central (2) ainsi que l'appui de couple de rotation (4) se situent à peu près dans un plan transversal (Y-Y), vertical, commun, passant par le centre de gravité (S), et en ce qu'un support d'appui (3) est maintenu sur le côté frontal du groupe (1), soutenu par rapport à la carrosserie du véhicule.

2. Dispositif de support selon la revendication 1, caractérisé en ce que le support central (2) est placé à une distance verticale ($h_1$) aussi réduite que possible, au-dessous du centre de gravité (S) et dans la zone peu sujette à oscillations du groupe (1), de manière qu'il se forme un support absorbant à peu près la totalité de la charge statique du groupe (1).

3. Dispositif de support selon les revendications 1 ou 2, caractérisé en ce que l'appui de couple de rotation (4) est disposé par rapport au support central (2), avec une base (h) correspondant à peu près à la hauteur de construction du groupe.

4. Dispositif de support selon une ou plusieurs des revendications précédentes, caractérisé en ce que le support d'appui (3) est placé à l'opposé en diagonale du support central (2), dans un plan longitudinal (a-a) vertical, passant par le centre de gravité (S).

5. Dispositif de support selon la revendication 4, caractérisé en ce que le support d'appui (3) présente en direction verticale ($c_Z$) ainsi que dans la direction de marche ($c_X$), une caractéristique relativement souple.

6. Dispositif de support selon une ou plusieurs des revendications précédentes, caractérisé en ce que le support central (2) présente dans la direction de la marche, une courbe de rigidité à deux paliers et en ce qu'il est réalisé pour les petites oscillations avec une rigidité réduite et, pour une grande déviation, plus rigide avec une variation progressive.

FIG.1

FIG.2